# EUROPÄISCHE PATENTSCHRIFT

(11) **EP 2 705 979 B1**
(45) Veröffentlichungstag und Bekanntmachung des Hinweises auf die Patenterteilung: **25.04.2018**
(21) Anmeldenummer: 13181969.0
(22) Anmeldetag: 28.08.2013
(51) Int. Cl.: A47B 88/50, B60N 2/07, B60N 2/46

(54) **Überlastschutz**
Overload protection
Protection contre les surcharges

(30) Priorität: 06.09.2012 DE 102012108306
(43) Veröffentlichungstag der Anmeldung: 12.03.2014
(73) Patentinhaber: Accuride International GmbH, 65582 Diez/Lahn (DE)
(72) Erfinder: Traiser, Reinhold, 65520 Bad Camberg (DE); Quirein, Thomas, 65582 Diez (DE)
(74) Vertreter: WSL Patentanwälte Partnerschaft mbB

(56) Entgegenhaltungen:
- EP-A1- 2 196 354
- WO-A1-03/089265
- WO-A1-2008/072868
- DE-A1- 10 011 148
- DE-A1-102011 052 265
- DE-U1-202004 013 162
- DE-U1-202006 015 291
- JP-U- S6 389 334
- US-A1- 2009 284 115

## Beschreibung

### Gegenstand der Erfindung

Die Erfindung betrifft ein Schienensystem, das wenigstens ein erstes und wenigstens ein zweites Schienenelement umfasst, wobei das erste und das zweite Schienenelement in Längsrichtung der Schienenelemente gegeneinander verfahrbar sind, und wobei das erste Schienenelement an einem ersten Ende eine senkrecht zur Längsrichtung der Schienenelemente verlaufende erste Lasche aufweist.

Die Erfindung betrifft weiter Mittelarmlehnen für Fahrzeuge und Konsolen, die mit Hilfe eines solchen Schienensystems verschiebbar sind.

### Hintergrund der Erfindung

Derartige Schienensysteme werden für zahlreiche unterschiedliche Anwendungen verwendet, wenn an Schienenelementen angebrachte Bauteile gegeneinander verschoben werden sollen. In der Regel ist eines der Schienenelemente mit einem Bauteil verbunden und ein weiteres Bauteil an einem anderen Schienenelement mit Hilfe des Schienensystems gegenüber dem ersten Bauteil verschiebbar angebracht.

Beispiele für derartige Anwendungen sind neben dem Möbelbau z.B. auch die Verwendung in Haushaltsgeräten, in Fahrzeugen und Flugzeugen, etc. Je nach Anwendung werden unterschiedliche Anforderungen an die Schienensysteme gestellt, einschließlich einer besonderen Leichtgängigkeit, hohen Stabilität, Temperaturbeständigkeit, hohen Tragkraft, etc.

Im Fahrzeugbau werden solche Schienensysteme beispielsweise für das Verschieben von Sitzen bzw. Sitzbestandteilen, für ausziehbare Konsolen, für verstellbare Mittelarmlehnen, etc. eingesetzt. Insbesondere bei Anwendungen im Fahrzeugbereich ist es erforderlich, dass das Schienensystem sowohl ein geringes Gewicht aufweist als auch hohen Kräften standhält, die sowohl in Verfahrrichtung, die der Längsrichtung der Schienenelemente entspricht, als auch senkrecht zu der Verfahrrichtung wirken können. Derartige Kräfte treten einerseits im normalen Gebrauch und andererseits insbesondere bei Unfällen auf, bei denen die Kräfte deutlich größer sind und ein Standhalten des Schienensystems gegenüber diesen Kräften für die Sicherheit von besonderer Bedeutung ist. Die WO2008/072868 A1 zeigt ein Schienensystem gemäß dem Oberbegriff des Anspruchs 1.

### Aufgabe der Erfindung

Der vorliegenden Erfindung lag daher die Aufgabe zugrunde, ein Schienensystem bereitzustellen, das ein geringes Gewicht aufweist und in wenigstens einer Endposition des Verfahrweges der Schienenelemente statische und dynamische Lasten besser aufnehmen kann als herkömmliche Schienensysteme.

### Detaillierte Beschreibung der Erfindung

Erfindungsgemäß wird die oben genannte Aufgabe gelöst durch ein Schienensystem der eingangs genannten Art, bei dem die erste Lasche des ersten Schienenelementes eine Aussparung aufweist und das erste Ende des zweiten Schienenelementes einen zu der Aussparung korrespondierenden Vorsprung aufweist, der in einer ersten Endposition innerhalb der Aussparung positioniert ist.
In der ersten Endposition wird bei einem so gestalteten Schienensystem der Vorsprung des wenigstens einen zweiten Schienenelementes in die Aussparung der ersten Lasche geführt. Bei einer Belastung des Schienensystems in der ersten Endposition wird dadurch eine Stabilisierung der beiden Schienenelemente erreicht, insbesondere gegenüber Kräften, die senkrecht zur Längsrichtung der Schienenelemente auf das Schienensystem einwirken. Die Stabilisierung erfolgt bei statischen und dynamischen Belastungen, wobei bei einer elastischen und ggf. auch bei einer plastischen Verformung der Schienenelemente die Lasche mit der Aussparung und insbesondere deren seitlichen Begrenzungen in Eingriff tritt.
Weiter kann der durch eine Lasche mit Aussparung und einen korrespondierenden Vorsprung an gegeneinander verfahrbaren Schienenelementen erzielte Schutz gegen Überlastung mit geringem Materialeinsatz erzielt werden, so dass das Gewicht des Schienensystems durch diese zusätzlichen Bestandteile nur geringfügig erhöht wird.
Ein weiterer Vorteil der gewählten Ausgestaltung eines Schienensystems für den Schutz vor Überlastung ist, dass das Ineinandergreifen von Aussparung und Lasche in einem weiten Temperaturbereich von ca. -40 °C bis 90 °C temperaturunabhängig erfolgt.

Der Überlastschutz beeinträchtigt oder beeinflusst zudem nicht die Funktion des Schienensystems und dessen Handhabung. Weiter ist diese Ausgestaltung sehr robust und weist eine hohe Lebensdauer auf.

Im Sinne der vorliegenden Anmeldung umfasst ein Schienensystem zwei oder mehr Schienenelemente, die in Längsrichtung der Schienenelemente gegeneinander verfahrbar sind. Derartige Schienensysteme haben unterschiedliche Ausgestaltungen und können neben zwei gegeneinander verfahrbaren Schienenelemente noch weitere Schienenelemente umfassen. Je mehr Schienenelemente vorhanden sind, desto weiter lassen sich die jeweils außen angeordneten Schienenelemente des Schienensystems gegeneinander verfahren. Beispielsweise erfordert ein sogenannter Vollauszug, bei dem das Schienensystem so weit ausgefahren werden kann, dass es eine Länge einnimmt, die mehr als die Summe der Längen der äußeren Schienen beträgt, das Vorhandensein von wenigstens drei gegeneinander verfahrbaren Schienenelementen.

Die Schienenelemente gemäß der vorliegenden Erfindung weisen in einer Ausführungsform im Wesentlichen die gleiche Länge auf, wobei Abweichungen von bis zu +/-5 % mit umfasst sind, die in bestimmten Ausführungsformen durch die Gestaltung der Enden der Schienen bedingt sind.

In anderen Ausführungsformen weichen die Längen der Schienenelemente deutlich voneinander ab. Dabei wird ein längeres Schienenelement gegenüber einem kürzeren Schienenelement verfahren und/oder ein kürzeres Schienenelement gegenüber einem längeren.

In bestimmten Ausführungsformen weichen die Längen der Schienenelemente voneinander ab und das kürzere Schienenelement ist gegenüber dem längeren Schienenelement innerhalb dessen Ausdehnung in Längsrichtung der Schienenelemente verfahrbar bzw. das längere ist gegenüber dem kürzeren Schienenelement in einem Bereich verfahrbar, in dem sich das kürzere Schienenelement innerhalb der Ausdehnung des längeren Schienenelementes in Längsrichtung der Schienenelemente befindet.

Die Lagerung der Schienenelemente in derartigen Schienensystemen gegeneinander erfolgt bei bestimmten Ausführungsformen über Gleit-, Rollen- oder Walzenlager oder über Kugellager. Insbesondere bei Anwendungen, bei denen hohe Belastungen auftreten, werden in der Regel Kugellager eingesetzt, da diese sowohl gut belastbar sind, als auch gute Verfahreigenschaften aufweisen.

Der Begriff, dass der Vorsprung innerhalb der Aussparung positioniert ist, wie er hier verwendet wird, umfasst, dass der Vorsprung ganz oder teilweise innerhalb der Aussparung verläuft.

Eine Endposition eines Schienenelementes beschreibt die Position eines Schienenelementes, bei der es in eine festgelegte Verfahrrichtung ohne plastische Verformung von einem oder mehreren Bestandteilen des Schienensystems gegenüber dem oder den anderen Schienenelement(en) nicht mehr weiter verfahrbar ist. Eine Endposition wird in der Regel dadurch bestimmt, dass ein Bestandteil eines Schienenelementes, insbesondere ein an einem Ende eines Schienenelementes befindlicher Bestandteil, wie z.B. eine Stirnfläche an einem Ende eines Schienenelementes, an einem weiteren Bestandteil des Schienensystems anschlägt. Als Anschlag können einerseits Bestandteile des ersten, zweiten oder eines weiteren Schienenelementes dienen, aber auch ein Lager, das die Bewegung der Schienenelemente gegeneinander vereinfacht und in einer Endposition mit einem den Anschlag bildenden Teil zwischen Bestandteilen eines Schienenelementes und eines weiteren Schienenelemente, insbesondere des ersten Schienenelementes und des zweiten Schienenelementes, zu liegen kommt. Insbesondere kann die Lasche des ersten Schienenelementes in bestimmten Ausführungsformen als ein Anschlag ausgebildet sein, an den das erste Ende des zweiten Schienenelementes unmittelbar oder mittelbar über eine an einem Lager befindliche ebenfalls senkrecht zu der Verfahrrichtung des Schienensystems verlaufende Lasche anschlägt.

Die Lasche an dem ersten Schienenelement ist in bestimmten Ausführungsformen einstückig mit dem ersten Schienenelement ausgeformt, was eine zusätzliche Stabilisierung bewirkt. In anderen Ausführungsformen ist die Lasche an dem ersten Schienenelement durch Verkleben oder Verschweißen angebracht.

Eine Aussparung im Sinne der vorliegenden Erfindung umfasst sowohl eine Vertiefung als auch eine vollständige Durchbrechung der Lasche. Vorzugsweise ist die Aussparung so ausgestaltet, dass sie in der Ebene der Lasche zu allen Seiten eine Begrenzung aufweist. Mit anderen Worten umgreift eine derartige Aussparung einen korrespondierenden Vorsprung so, dass eine Bewegung des Vorsprungs senkrecht zu Längsrichtung der Schienenelemente bzw. senkrecht zur Verfahrrichtung der Schienenelemente innerhalb der Aussparung im Wesentlichen unterbunden wird.

In einer Ausführungsform beträgt die Fläche der Aussparung in der Lasche zwischen 5 % und 10 % der Fläche der Lasche. Durch dieses Verhältnis wird eine besonders stabile Lasche mit Aussparung bereitgestellt, die einwirkenden Kräften gut standhält und einfach herstellbar ist.

Erfindungsgemäß sind unterschiedliche Ausgestaltungen von Aussparung und Vorsprung. Insbesondere sind Aussparungen umfasst, die einen runden, ovalen, viereckigen oder mehreckigen Querschnitt bei Draufsicht aufweisen. Es versteht sich, dass der korrespondierende Vorsprung in diesen Fällen ebenfalls einen runden, ovalen, viereckigen oder mehreckigen Querschnitt aufweist.

In einer Ausführungsform ist der korrespondierende Vorsprung an dem zweiten Schienenelement in der ersten Endposition mit Spiel in der Aussparung positioniert. Der Vorsprung ist in der ersten Endposition so in der Aussparung positioniert, dass er mit den seitlichen Begrenzungen der Aussparung im unbelasteten Zustand des Schienensystems nicht in berührenden Eingriff tritt, jedoch in die Aussparung eingepasst ist. Durch diese Ausgestaltung werden innerhalb von üblichen Toleranzen abweichende Maße von Vorsprung bzw. Aussparung ausgeglichen und zudem störende Reibungsgeräusche beim Verfahren der Schienenelemente des Schienensystems in die erste Endposition vermieden.

Der Begriff mit Spiel beschreibt dabei einen geringen Abstand zwischen Vorsprung und den Begrenzungen der Aussparung. In einer Ausführungsform liegt der Abstand zwischen Vorsprung und den Begrenzungen der Aussparung im Bereich von 0, 2 mm bis 1 mm, vorzugsweise 0,3 mm bis 0,7 mm. In einer Ausführungsform beträgt der Abstand zwischen Vorsprung und den Begrenzungen der Aussparung in etwa 15 % bis 80 % der Materialstärke des Vorsprungs, vorzugsweise 25 % bis 60 %.

In einer Ausführungsform durchbricht die Aussparung in der ersten Lasche diese erste Lasche vollständig und der korrespondierende Vorsprung an dem zweiten Schienenelement ist in der ersten Endposition durch die Aussparung hindurch geführt. Durch diese Ausgestaltung wird eine besonders gute Stabilisierung erreicht. Zudem wird im Gegensatz zu einer als Vertiefung ausgestalteten Aussparung verhindert, dass der Vorsprung beim Verfahren des Schienenelementes in die erste Endposition an der Vertiefung abprallt und nicht dauerhaft in der Aussparung positioniert ist. Durch ein solches Abprallen würde das zweite Schienenelement wieder aus der Endposition bewegt werden und ein Wirken des durch Aussparung und Vorsprung gebildeten Überlastschutzes wäre nicht mehr gewährleistet.

In einer Ausführungsform sind Vorsprung und Aussparung so gestaltet, dass der Vorsprung vollständig durch die Aussparung hindurch geführt wird und ein Teil des Vorsprungs auf der von dem zweiten Schienenelement abgewandten Seite über die Lasche hinausragt. In einer Ausführungsform ragt der Vorsprung ungefähr um die Materialdicke der Lasche über die Lasche hinaus, wobei Abweichungen von +/-20 % mit umfasst sind.

In einer Ausführungsform ist die Aussparung ein in Draufsicht rechteckiger Schlitz und der Vorsprung des zweiten Schienenelementes weist einen korrespondierenden rechteckigen Querschnitt auf. Diese Ausführungsform ist leicht herstellbar und kann in vielen Fällen ohne weitere Änderungen des Schienensystems verwirklicht werden.

In einer Ausführungsform weist das wenigstens eine zweite Schienenelement ein Profil mit zwei freien Schenkeln und ein die freien Schenkel des C-förmigen Profils verbindendes Mittelstück auf, wobei die Aussparung so in der Lasche angeordnet ist, dass ein korrespondierender Vorsprung, der durch eine Verlängerung des verbindenden Mittelstücks gebildet wird, in einer ersten Endposition innerhalb der Aussparung positioniert ist. Durch diese Ausgestaltung kann der Überlastschutz mit besonders geringem Materialaufwand gebildet werden. Zudem wird dadurch insbesondere bei Belastungen in Verfahrrichtung des Schienensystems ein besonders guter Schutz vor Überlastung bereitgestellt.

In einer Ausführungsform weist das erste Schienenelement ein C-förmiges Profil mit zwei freien Schenkeln des Profils auf und das zweite Schienenelement verläuft innerhalb des von den freien Schenkeln eingefassten Bereichs. Unter dem von den freien Schenkeln eingefassten Bereich im Sinne dieser Erfindung wird der Bereich verstanden, der durch die freien Schenkel in Richtung des einen freien Schenkels zu dem anderen freien Schenkel eingefasst wird. Das zweite Schienenelement kann also in bestimmten Ausführungsformen in einer Richtung senkrecht zu dem verbindenden Mittelstück über die Enden der freien Schenkel hinausragen. Durch diese Ausgestaltung wird eine weitere Stabilisierung gegenüber senkrecht zu der Längsrichtung der Schienenelemente einwirkenden Kräften bereitgestellt, da das zweite Schienenelement bei einer solchen Belastung zusätzlich zu dem Überlastschutz in der Endposition auch durch die freien Schenkel des ersten Schienenelementes abgefangen wird.

In einer Ausführungsform ist das erste Schienenelement länger als das zweite Schienenelement und ein Verfahrweg des ersten Schienenelementes und des zweiten Schienenelementes gegeneinander verläuft von der ersten Endposition zu einer zweiten Endposition.

In einer Ausführungsform weist das erste Schienenelement ein im Wesentlichen C-förmiges Profil mit zwei freien Schenkeln und einem die freien Schenkel verbindenden Mittelstück auf, und die erste Lasche und/oder die zweite Lasche ist eine umgebogene Verlängerung eines die freien Schenkel des C-förmigen Profils verbindenden Mittelstücks. Diese Ausgestaltung ist besonders leicht zu realisieren und erfordert nur einen geringen Materialaufwand. Durch die einstückige Ausgestaltung von erstem Schienenelement und Lasche wird zudem eine besonders gute Stabilität bereitgestellt. Ein Schienenelement mit im Wesentlichen C-förmigen Profil im Sinne dieser Erfindung weist ein Mittelstück auf, das zwei freie Schenkel des Profils verbindet, wobei die freien Enden der freien Schenkel von dem Mittelstück ausgehend in die gleiche Richtung ragen.

In einer Ausführungsform weist zusätzlich das zweite Schienenelement ebenfalls ein im Wesentlichen C-förmiges Profil mit zwei freien Schenkeln und einem die freien Schenkel verbindenden Mittelstück auf, wobei der erste und/oder zweite Vorsprung eine teilweise Verlängerung des Mittelstücks darstellt.

In einer Ausführungsform weist das Schienensystem genau ein erstes Schienenelement und genau ein zweites Schienenelement auf. Dadurch lässt sich besonders leicht ein Überlastschutz durch eine Lasche mit Aussparung und einem korrespondierenden Vorsprung realisieren, da ein solches Schienensystem neben dem ersten und zweiten Schienenelement lediglich ein Element, das die Verfahrbewegung ermöglicht bzw. erleichtert, benötigt und dadurch eine Lasche mit Aussparung an einem Ende des ersten Schienenelementes und ein Vorsprung an einem Ende des zweiten Schienenelementes zur Bereitstellung des Überlastschutzes besonders leicht realisierbar sind.

In einer Ausführungsform weist das wenigstens eine erste Schienenelement an einem zweiten Ende eine senkrecht zur Längsrichtung der Schienenelemente verlaufende zweite Lasche auf, die eine Aussparung aufweist, wobei ein weiteres Schienenelement oder das zweite Schienenelement einen zu der Aussparung korrespondierenden Vorsprung aufweist, der in einer zweiten Endposition innerhalb der Aussparung positioniert ist. Durch diese Ausgestaltung wird ein zusätzlicher Überlastschutz in einem Zustand bereitgestellt, bei dem ein zweites Schienenelement in eine zweite Endposition verfahren ist. Der korrespondierende Vorsprung befindet sich bei bestimmten Ausführungsformen an dem zweiten Schienenelement, das den Vorsprung an seinem ersten Ende aufweist. In bestimmten Ausführungsformen befindet sich der korrespondierende Vorsprung an dem zweiten Ende eines weiteren Schienenelementes. Es versteht sich, dass die Ausgestaltung der Lasche und der Aussparung sowie des Vorsprungs wie oben beschrieben in unterschiedlichen Varianten und Ausführungsformen erfolgen kann. Insbesondere können die oben beschriebenen Varianten der Form der Aussparung und des Vorsprungs, die Anbringung der Lasche an dem ersten Schienenelement, die Anbringung des Vorsprungs an dem zweiten Schienenelement sowie weitere oben beschriebene Ausgestaltungsformen in gleicher Weise auf die Ausgestaltung des ersten Schienelementes an seinem zweite Ende und des zweiten Endes des zweiten Schienenelementes angewendet werden. Das gleiche trifft auf die Ausgestaltung der Schienenelemente selbst zu.

In einer Ausführungsform sind die erste und die zweite Lasche an dem ersten Schienenelement einschließlich der Aussparung spiegelsymmetrisch zueinander. D.h. sie sind an den beiden Enden des ersten Schienenelementes in gleicher Weise angeordnet und in gleicher Weise ausgestaltet.

In einer Ausführungsform sind das wenigstens eine erste und/oder das wenigstens eine zweite Schienenelement aus Leichtmetall, vorzugsweise aus Aluminium hergestellt. Diese Ausführungsform eignet sich insbesondere für Anwendungen, bei denen ein leichtes Gewicht der Bauteile von großer Bedeutung ist, wie beispielsweise in Fahrzeugen und Flugzeugen. Aufgrund der Ausgestaltung des Überlastschutzes mit einer Lasche mit Aussparung und einem korrespondierenden Vorsprung lässt sich trotz Verwendung eines so leichten Materials ein guter Schutz gegen Überlast bereitstellen.

Die Erfindung umfasst auch eine Konsole, die mit Hilfe wenigstens eines erfindungsgemäßen Schienensystems verschiebbar ist.

Die Erfindung umfasst auch eine Mittelarmlehne für Fahrzeuge, die mit Hilfe wenigstens eines erfindungsgemäßen Schienensystems verschiebbar ist.

Weitere Vorteile, Merkmale und Anwendungsmöglichkeiten der vorliegenden Erfindung werden deutlich anhand der folgenden Beschreibung bevorzugter Ausführungsformen und der dazugehörigen Figuren.

Es zeigen:
- Figur 1:: eine erfindungsgemäße Ausführungsform eines Schienensystems in einer von der ersten Endposition verschiedenen Position sowie in einer ersten Endposition,
- Figur 2:: Detailansichten der in Figur 1 dargestellten Ausführungsform eines erfindungsgemäßen Schienensystems in einer ersten Endposition und
- Figur 3:: eine Konsole, die ein erfindungsgemäßes Schienensystem gemäß Figur 1 umfasst.

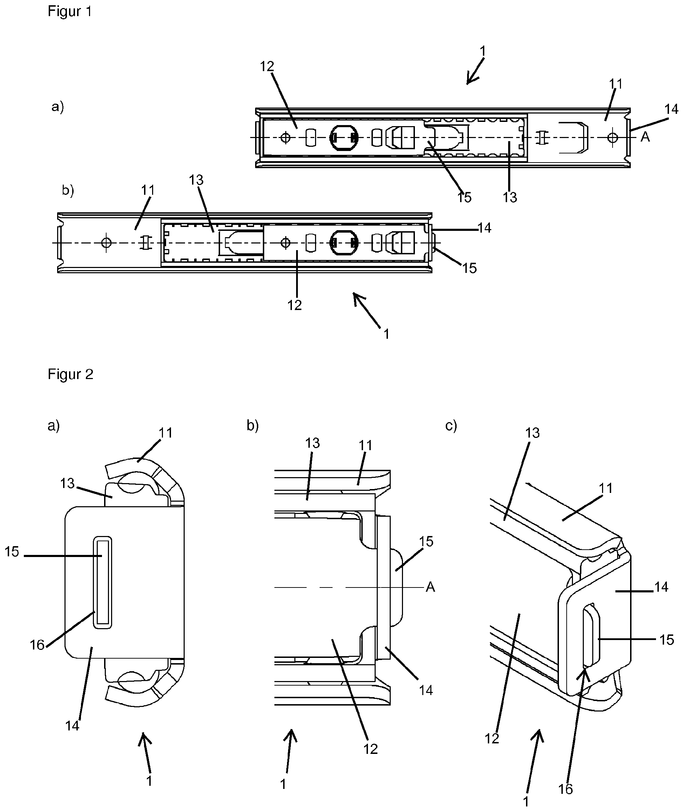

Das in den Figuren 1 bis 3 gezeigte erfindungsgemäße Schienensystem 1 weist ein erstes Schienenelement 11 und ein zweites Schienenelement 12 auf. Die Schienenelemente sind mit Hilfe eines Lagers, in diesem Fall eines Kugelkäfigs 13 und darin befindlicher Gleitkörper bzw. Kugeln leicht gegeneinander verfahrbar, wobei die Verfahrrichtung der Längsrichtung A der Schienenelemente entspricht.

Bei den in den Figuren 1 bis 3 dargestellten erfindungsgemäßen Ausführungsformen ist das zweite Schienenelement 12 aus Sicht des Betrachters positionsfest, während das erste Schienenelement 11 gegenüber dem zweiten Schienenelement verfahrbar ist. Bei dieser speziellen Ausgestaltung hat zudem das erste Schienenelement 11 eine deutlich größere Ausdehnung in Längsrichtung A als das zweite Schienenelement 12. Beim Verfahren der Schienenelemente gegeneinander verbleibt das zweite Schienenelement 12 in Verfahrrichtung A in allen Positionen innerhalb der Ausdehnung in Längsrichtung A des ersten Schienenelements 11.

In Figur 1a) ist das Schienensystem 1 in Draufsicht in einer Position gezeigt, die sich von einer ersten Endposition unterscheidet. Deutlich zu erkennen ist, dass das erste Schienenelement 11 an seinem ersten Ende eine erste Lasche 14 aufweist und das zweite Schienenelement 12 an seinem ersten Ende einen Vorsprung 15. Bei Verfahren des Schienensystems in eine erste Endposition, wie in Figur 1b) gezeigt, ist das erste Schienenelement 11 gegenüber dem zweiten Schienenelement 12 so weit verfahren, dass eine erste Endposition erreicht ist, in der kein weiteres Verfahren in diese Verfahrrichtung, die parallel zur Längsrichtung A der Schienenelemente verläuft, mehr möglich ist. In dieser ersten Endposition schlägt das erste Schienenelement 11 mit seiner Lasche 14 an einen Bestandteil des Kugelkäfigs 13 an, der wiederum an dem ersten Ende des zweiten Schienenelementes 12 anschlägt. Dabei wird der Vorsprung 15 innerhalb einer Aussparung 16 der Lasche 14, die in den in Figur 1 gewählten Darstellungen nicht sichtbar ist, positioniert.

In Figur 2 sind Detailansichten des in Figur 1 schematisch in einer Draufsicht dargestellten Schienensystems in einer ersten Endposition gezeigt. Figur 2a) ist eine Draufsicht auf das erste Ende des ersten Schienenelementes 11, das eine senkrecht zur Längsrichtung A verlaufende erste Lasche 14 aufweist. In der ersten Lasche 14 befindet sich eine Aussparung 16, die bei der dargestellten Ausführungsform die Lasche 14 vollständig durchbricht. Bei Verfahren des Schienensystems in eine erste Endposition ist das zweite Schienenelement 12, das bei dieser Draufsicht von der ersten Lasche des ersten Schienenelementes 11 verdeckt wird, so positioniert, dass der Vorsprung 15 des zweiten Schienenelementes 12 in der Aussparung 16 positioniert ist. In dieser Darstellung ist gut erkennbar, dass bei dieser Ausführungsform der Vorsprung 15 einen zu der Aussparung 16 korrespondierenden Querschnitt aufweist und mit Spiel innerhalb der Aussparung angeordnet ist.

Die weitere Darstellung in Figur 2b) ist eine teilweise weggeschnittene Ansicht eines Teils aus Figur 1b), wobei jeweils die ersten Enden des ersten und zweiten Schienenelementes 11, 12 des Schienensystems 1 in einer ersten Endposition gezeigt sind. Bei dieser Darstellung ist deutlich erkennbar, dass der Vorsprung 15 durch die in dieser Darstellung nicht sichtbare Aussparung 16 vollständig hindurchgeführt ist. Überdies ragt der Vorsprung 15 auf der von dem zweiten Schienenelement 12 abgewandten Seite der Lasche 14 über diese Lasche hinaus.

Figur 2c) ist eine perspektivische Darstellung des in Figur 2b) gezeigten Abschnittes, aus der erkennbar ist, dass der an dem ersten Ende des zweiten Schienenelements 12 angeordnete Vorsprung 15 in der ersten Endposition in der Aussparung 16 der ersten Lasche 14 positioniert ist und durch diese Aussparung hindurchgeführt ist.

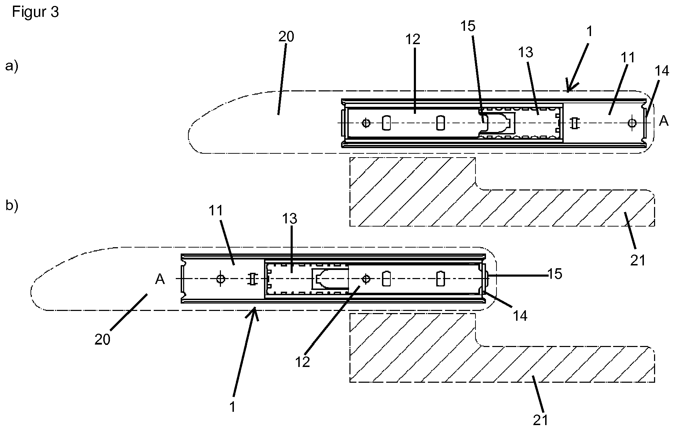

Figur 3 zeigt eine Konsole, insbesondere eine Mittelarmlehne eines Fahrzeugs 20, die mit Hilfe eines Schienensystems 1 gegenüber einer Basis 21 verschiebbar ist. Es handelt sich um eine seitliche Draufsicht, wobei aus Gründen der Übersichtlichkeit lediglich die Umrisse der Mittelarmlehne 20 mit einer durchbrochenen Linie und die Umrisse der Basis 21 ebenfalls mit einer durchbrochenen Linie gezeigt sind, wobei die Basis 21 zur Kenntlichmachung zusätzlich schraffiert ist.

Das Schienensystem 1, das zur Verschiebung der Mittelarmlehne verwendet wird, entspricht den in Figur 1 und 2 gezeigten Ausführungsformen. In Figur 3a) ist die Mittelarmlehne in einer Position gezeigt, in der kein Überlastschutz wirkt. Diese Position entspricht der in Figur 1a) gezeigten Position des Schienensystems 1. In Figur 3b) ist die Mittelarmlehne 20 gegenüber der Basis 21 verschoben, wobei sich das Schienensystem 1 in einer ersten Endposition befindet, die der in Figur 1b) gezeigten Position entspricht. Hinsichtlich der detaillierten Beschreibung des Schienensystems wird daher auf die Beschreibung zu Figur 1 verwiesen.

Bei einer solchen Ausführungsform einer Mittelarmkonsole ist diese entlang der Längsrichtung A des Schienensystems gegenüber einer Basis 21 verschiebbar, wobei bei der gezeigten Ausführungsform das erste Schienenelement 11 mit der Mittelarmlehne 20 fest verbunden ist, während das zweite Schienenelement 12 mit der Basis 21 fest verbunden ist.

In der in Figur 3b) gezeigten Position wirkt ein Überlastschutz, sodass bei besonders großer Belastung, beispielsweise durch Druck auf die Mittelarmlehne von oben, durch den Vorsprung 15, der innerhalb einer Aussparung 16 in einer ersten Lasche 14 des ersten Schienenelementes 11 positioniert ist, gewährleistet wird, dass die Schienenelemente nicht senkrecht zur Längsrichtung A gegeneinander verschoben werden.

Für Zwecke der ursprünglichen Offenbarung wird darauf hingewiesen, dass sämtliche Merkmale, wie sie sich aus der vorliegenden Beschreibung, den Zeichnungen und den abhängigen Ansprüchen für einen Fachmann erschließen, auch wenn sie konkret nur im Zusammenhang mit bestimmten weiteren Merkmalen beschrieben wurden, sowohl einzeln als auch in beliebigen Zusammenstellungen mit anderen der hier offenbarten Merkmale oder Merkmalsgruppen kombinierbar sind, soweit dies nicht ausdrücklich ausgeschlossen wurde oder technische Gegebenheiten derartige Kombinationen unmöglich oder sinnlos machen. Auf die umfassende, explizite Darstellung sämtlicher denkbarer Merkmalskombinationen und die Betonung der Unabhängigkeit der einzelnen Merkmale voneinander wird hier nur der Kürze und der Lesbarkeit der Beschreibung wegen verzichtet.

Während die Erfindung im Detail in den Zeichnungen und der vorangehenden Beschreibung dargestellt und beschrieben wurde, erfolgt diese Darstellung und Beschreibung lediglich beispielhaft und ist nicht als Beschränkung des Schutzbereichs gedacht, so wie er durch die Ansprüche definiert wird. Die Erfindung ist nicht auf die offenbarten Ausführungsformen beschränkt.

### Bezugzeichenliste

- 1: Schienensystem
- 11: erstes Schienenelement
- 12: zweites Schienenelement
- 13: Kugelkäfig
- 14: erste Lasche des ersten Schienenelements
- 15: Vorsprung des zweiten Schienenelements
- 16: Aussparung in der ersten Lasche
- 20: Mittelarmlehne
- 21: Basis
- A: Längsrichtung der Schienenelemente

## Patentansprüche

1. Schienensystem (1), das wenigstens ein erstes (11) und wenigstens ein zweites Schienenelement (12) umfasst, wobei das erste und das zweite Schienenelement in Längsrichtung der Schienenelemente gegeneinander verfahrbar sind, und wobei das erste Schienenelement an einem ersten Ende eine senkrecht zur Längsrichtung der Schienenelemente verlaufende erste Lasche (14) aufweist, **dadurch gekennzeichnet, dass** die erste Lasche des ersten Schienenelementes eine Aussparung (16) aufweist und das erste Ende des zweiten Schienenelementes einen zu der Aussparung korrespondierenden Vorsprung (15) aufweist, der in einer ersten Endposition innerhalb der Aussparung positioniert ist.

2. Schienensystem (1) gemäß Anspruch 1, **dadurch gekennzeichnet, dass** der korrespondierende Vorsprung (15) an dem zweiten Schienenelement (12) in der ersten Endposition mit Spiel in der Aussparung (16) positioniert ist.

3. Schienensystem (1) gemäß einem der Ansprüche 1 oder 2, **dadurch gekennzeichnet, dass** die Aussparung (16) in der ersten Lasche (14) diese erste Lasche vollständig durchbricht und der korrespondierende Vorsprung (15) an dem zweiten Schienenelement (12) in der ersten Endposition durch die Aussparung hindurch geführt ist.

4. Schienensystem (1) gemäß einem der vorangehenden Ansprüche, **dadurch gekennzeichnet, dass** die Aussparung (16) ein in Draufsicht rechteckiger Schlitz ist und der Vorsprung (15) des zweiten Schienenelementes einen rechteckigen Querschnitt aufweist.

5. Schienensystem (1) gemäß einem der vorangehenden Ansprüche, **dadurch gekennzeichnet, dass** das wenigstens eine zweite Schienenelement (12) ein C-förmiges Profil mit zwei freien Schenkeln und ein die freien Schenkel des C-förmigen Profils verbindendes Mittelstück aufweist, wobei die Aussparung (16) so in der Lasche (14) angeordnet ist, dass ein korrespondierender Vorsprung (15), der durch eine Verlängerung des verbindenden Mittelstücks gebildet wird, in einer ersten Endposition des zweiten Schienenelementes (12) innerhalb der Aussparung (16) positioniert ist.

6. Schienensystem (1) gemäß einem der vorangehenden Ansprüche, **dadurch gekennzeichnet, dass** das erste Schienenelement (11) ein C-förmiges Profil mit zwei freien Schenkeln des Profils aufweist und das zweite Schienenelement (12) innerhalb des von den freien Schenkel eingefassten Bereichs verläuft.

7. Schienensystem (1) gemäß einem der vorangehenden Ansprüche, **dadurch gekennzeichnet, dass** das erste Schienenelement (11) länger ist als das zweite Schienenelement (12) und ein Verfahrweg des ersten Schienenelementes und des zweiten Schienenelementes gegeneinander von der ersten Endposition zu einer zweiten Endposition verläuft.

8. Schienensystem (1) gemäß einem der vorangehenden Ansprüche, **dadurch gekennzeichnet, dass** das erste Schienenelement (11) ein im Wesentlichen C-förmiges Profil mit zwei freien Schenkeln und einem die freien Schenkel verbindenden Mittelstück aufweist und die erste Lasche (14) und/oder die zweite Lasche eine umgebogene Verlängerung eines die freien Schenkel des C-förmigen Profils verbindenden Mittelstücks ist.

9. Schienensystem (1) gemäß einem der vorangehenden Ansprüche, **dadurch gekennzeichnet, dass** das Schienensystem genau ein erstes Schienenelement (11) und genau ein zweites Schienenelement (12) aufweist.

10. Schienensystem (1) gemäß einem der vorangehenden Ansprüche, **dadurch gekennzeichnet, dass** das wenigstens eine erste Schienenelement (11) an einem zweiten Ende eine senkrecht zur Längsrichtung der Schienenelemente verlaufende zweite Lasche aufweist, die eine Aussparung aufweist, wobei ein weiteres Schienenelement oder das zweite Schienenelement (12) einen zu der Aussparung korrespondierenden Vorsprung aufweist, der in einer zweiten Endposition innerhalb der Aussparung positioniert ist.

11. Schienensystem (1) gemäß einem der vorangehenden Ansprüche, **dadurch gekennzeichnet, dass** das wenigstens eine erste (11) und/oder das wenigstens eine zweite Schienenelement (12) aus Leichtmetall, vorzugsweise aus Aluminium hergestellt sind.

12. Konsole, die mit Hilfe wenigstens eines Schienensystems (1) gemäß einem der vorangehenden Ansprüche verschiebbar ist.

13. Mittelarmlehne (20) für Fahrzeuge, die mit Hilfe wenigstens eines Schienensystems (1) gemäß einem der Ansprüche 1 bis 11 verschiebbar ist.

## Claims

1. Rail system (1), which comprises at least one first (11) and at least one second rail element (12), wherein the first and the second rail element are movable against each other in a longitudinal direction of the rail elements, and wherein the first rail element comprises at a first end a first flap (14) which runs perpendicular to the longitudinal direction of the rail elements, **characterized in that** the first flap of the first rail element comprises a recess (16) and the first end of the second rail element comprises a protrusion (15) corresponding to the recess, wherein the protrusion in a first end position is positioned within the recess.

2. Rail system (1) according to claim 1, **characterized in that** the corresponding protrusion (15) on the second rail element (12) in the first end position is positioned with play in the recess (16).

3. Rail system (1) according to one of claims 1 or 2, **characterized in that** the recess (16) in the first flap (14) penetrates completely through said first flap and the corresponding protrusion (15) on the second rail element (12) is guided through the recess in the first end position.

4. Rail system (1) according to one of the preceding claims, **characterized in that** the recess (16) is a slit which is rectangular in a top view and the protrusion (15) of the second rail element comprises a rectangular cross-section.

5. Rail system (1) according to one of the preceding claims, **characterized in that** the at least one second rail element (12) comprises a C-shaped profile with two free legs and a center section connecting the free legs of the C-shaped profile, wherein the recess (16) is arranged in the flap (14) in such a way that a corresponding protrusion (15), which is formed by an elongation of the connecting center section, in a first end position of the second rail element (12) is positioned within the recess (16).

6. Rail system (1) according to one of the preceding claims, **characterized in that** the first rail element (11) comprises a C-shaped profile with two free legs of the profile and the second rail element (12) extends within the area framed by the free legs.

7. Rail system (1) according to one of the preceding claims, **characterized in that** the first rail element (11) is longer than the second rail element (12) and a travel path of the first rail element and of the second rail element against each other extends from the first end position to a second end position.

8. Rail system (1) according to one of the preceding claims, **characterized in that** the first rail element (11) comprises a substantially C-shaped profile with two free legs and a center section connecting the free legs and the first flap (14) and/or the second flap is a bent elongation of a center section connecting the free legs of the C-shaped profile.

9. Rail system (1) according to one of the preceding claims, **characterized in that** the rail system comprises exactly one first rail element (11) and exactly one second rail element (12).

10. Rail system (1) according to one of the preceding claims, **characterized in that** the at least one first rail element (11) comprises at a second end a second flap extending perpendicular to the longitudinal direction of the rail elements, which comprises a recess, wherein a further rail element or the second rail element (12) comprises a protrusion corresponding to the recess, which in a second end position is positioned within the recess.

11. Rail system (1) according to one of the preceding claims, **characterized in that** the at least one first (11) and/or the at least one second rail element (12) is made of light metal, preferably of aluminium.

12. Console movable by means of at least one rail system (1) according to one of the preceding claims.

13. Central armrest (20) for vehicles movable by means of at least one rail system (1) according to one of claims 1 to 11.

## Revendications

1. Système de rails (1) qui comprend au moins un premier (11) et un deuxième (12) éléments de rail, le premier et le deuxième éléments de rail étant déplaçables l'un par rapport à l'autre dans la direction longitudinale des rails, et le premier élément de rail comprenant, à une première extrémité, une première patte (14) s'étendant perpendiculairement à la direction longitudinale des éléments de rail, **caractérisé en ce que** la première patte du premier élément de rail comprend un évidement (16) et **en ce que** la première extrémité du deuxième élément de rail comprend une saillie (15) correspondant à l'évidement, laquelle saillie est positionnée, dans une première position finale, à l'intérieur de l'évidement.

2. Système de rails (1) selon la revendication 1, **caractérisé en ce que** la saillie (15) correspondante est positionné au deuxième élément de rail (12), dans la première position finale, avec jeu dans l'évidement (16).

3. Système de rails (1) selon la revendication 1 ou 2, **caractérisé en ce que** l'évidement (16) dans la première patte (14) traverse cette première patte entièrement et **en ce que** la saillie (15) correspondante au deuxième élément de rail (12) est passée, dans la première position finale, à travers l'évidement.

4. Système de rails (1) selon l'une des revendications précédentes, **caractérisé en ce que** l'évidement (16) est, en une vue de dessus, une fente et **en ce que** la saillie (15) du deuxième élément de rail présente une section transversale rectangulaire.

5. Système de rails (1) selon l'une des revendications précédentes, **caractérisé en ce que** ledit au moins un deuxième élément de rail (12) présente un profil en forme de C avec deux branches libres et une partie intermédiaire reliant l'une à l'autre les branches libres du profil en forme de C, l'évidement (16) étant disposé dans la patte (14) de façon telle qu'une saillie (15) correspondante, qui est formée par une extension de la partie intermédiaire de liaison, soit positionnée, dans une première position finale du deuxième élément de rail (12), à l'intérieur de l'évidement (16).

6. Système de rails (1) selon l'une des revendications précédentes, **caractérisé en ce que** le premier élément de rail (11) présente un profil en C avec deux branches libres du profil et **en ce que** le deuxième élément de rail (12) s'étend à l'intérieur de la zone entourée par les branches libres.

7. Système de rails (1) selon l'une des revendications précédentes, **caractérisé en ce que** le premier élément de rail (11) est plus long que le deuxième élément de rail (12) et **en ce qu'**un trajet de déplacement du premier élément de rail par rapport au deuxième élément de rail s'étend de la première position finale jusqu'à une deuxième position finale.

8. Système de rails (1) selon l'une des revendications précédentes, **caractérisé en ce que** le premier élément de rail (11) présente un profil ayant essentiellement la forme d'un C avec deux branches libres et avec une partie intermédiaire reliant l'une à l'autre les branches libres, et **en ce que** la première patte (14) et/ou la deuxième patte est une extension repliée de la partie intermédiaire reliant entre elles les branches libres du profil en forme de C.

9. Système de rails (1) selon l'une des revendications précédentes, **caractérisé en ce que** le système de rails comprend exactement un premier élément de rail (11) et exactement un second élément de rail (12).

10. Système de rails (1) selon l'une des revendications précédentes, **caractérisé en ce que** ledit au moins un premier élément de rail (11) comprend, à une deuxième extrémité, une deuxième patte s'étendant perpendiculairement à la direction longitudinale des éléments de rail, laquelle patte comprend un évidement, un autre élément de rail ou le deuxième élément de rail (12) comprenant une saillie correspondant à l'évidement, la saillie étant positionnée, dans une deuxième position finale, à l'intérieur de l'évidement.

11. Système de rails (1) selon l'une des revendications précédentes, **caractérisé en ce que** ledit au moins un premier (11) et/ou ledit au moins un deuxième (12) élément de rail est réalisé en métal léger, de préférence en aluminium.

12. Console qui est déplaçable à l'aide d'au moins un système de rails (1) selon l'une des revendications précédentes.

13. Accoudoir central (20) pour des véhicules, qui est déplaçable à l'aide d'au moins un système de rails (1) selon l'une des revendications 1 à 11.
